# EUROPEAN PATENT SPECIFICATION

(11) **EP 2 014 513 B1**
(45) Date of publication and mention of the grant of the patent: **10.06.2015**
(21) Application number: 07742212.9
(22) Date of filing: 24.04.2007
(51) Int. Cl.: B60R 13/02, B60N 3/04

(54) **FLOOR SPACER FOR VEHICLE AND VEHICLE INTERIOR STRUCTURE**
BODENABSTANDSSTÜCK FÜR FAHRZEUG UND FAHRZEUGINNENSTRUKTUR
CALE DE SOL POUR VÉHICULE ET STRUCTURE INTÉRIEURE DE VÉHICULE

(30) Priority: 25.04.2006 JP 2006121059
(43) Date of publication of application: 14.01.2009
(73) Proprietor: Sekisui Plastics Co., Ltd., Osaka-shi, Osaka 530-0047 (JP)
(72) Inventor: TAKAKURA, Shinji, Koga-shi Ibaraki 306-0204 (JP); HIRAISHI, Ayumi, Shimotsuma-shi Ibaraki 304-0002 (JP); SUZUKI, Isao, Saitama-shi Saitama 331-0804 (JP)
(74) Representative: Hoffmann Eitle
(86) International application number: PCT/JP2007/058777
(87) International publication number: WO 2007/123232

(56) References cited:
- WO-A-01/74559
- JP-A- 09 071 186
- JP-A- 2005 280 560
- JP-A- 2006 015 848
- JP-U- 3 022 811
- US-A- 4 829 627
- US-A- 5 136 771
- US-A1- 2003 077 344

## Description

### Technical Field

The present invention relates to a vehicle interior structure including a floor spacer for a vehicle and a floor carpet.

### Background Art

In order to protect the leg portions of an occupant from an impact at the time of collision of a vehicle or the like, a pad for absorbing an impact on leg portions is generally placed under occupant foot portions in the front side of the floor in a vehicle compartment, and in order to adjust the heights of a seat and a floor surface in a vehicle having various interior sizes, a horizontal pad is generally placed on the floor surface of the vehicle. The pad for absorbing an impact on leg portions and the horizontal pad are used as one floor spacer by being assembled by fitting, bonding or the like after being separately molded, or by being integrally molded, besides being used independently. For example, JP Patent Publication (Kokai) No. 2003-118460 discloses the floor spacer which is formed by separately molding a pad for absorbing an impact on leg portions and a horizontal pad, and fitting a projected portion which is provided at the pad for absorbing an impact on leg portions into a through-hole which is provided in the horizontal pad.

Incidentally, a floor carpet is laid on the surface of the floor spacer on the inner side of the vehicle compartment after the floor spacer is placed. The floor carpet is not bonded to the floor spacer, because the floor carpet needs to be removed at the time of maintenance and needs to be removed from the vehicle at the time of disposal of the vehicle from the viewpoint of environmental effect. In concrete, the floor carpet is laid on the floor spacer, and its end portion is only buried in the groove provided in the connection portions of the floor frame and the side frame of the vehicle.

Therefore, when the heels and toes of an occupant slide on the floor carpet, the problem of the floor carpet being displaced relatively to the floor spacer frequently occurs.

JP 2005 280560 A discloses a lower leg part shock absorption pad with sound insulating property which can effectively absorb the shock and effectively improve the sound insulating property in a cabin of an automobile. The shock absorption pads for a vehicle on which an occupant's feet are placed are equipped with a pad body which is composed of a foam molded product of thermoplastic resin beads and have a plurality of longitudinal through-holes parallelly formed at an approximately equal interval. The sound insulting sheet, a sound absorption material, and the foam molded product of the thermoplastic resin beads having permeability or the like are laminated on the pad body. Carpets having permeability or no permeability can be additionally laminated on the pad body.

Document JP 2006-015848 A shows the features of the preamble of claim 1.

### Summary of the Invention

A a vehicle interior structure of the present invention is made in view of the above described problem, and has an object to provide a floor spacer for a vehicle capable of making it difficult to cause a relative displacement of a floor carpet to the floor spacer without using an adhesive or the like.

According to the present invention, there is provided a vehicle interior structure as recited in Claim 1 below.

By adopting the vehicle interior structure constituted of the floor spacer to which graining is applied to a part or all of the one surface already described, and the floor carpet which is stacked on the grained portion, the interior structure capable of effectively preventing the relative displacement of the floor carpet while ensuring easiness of removing the floor carpet can be formed. On the back surface of the floor carpet which abuts on the grained portion, a fiber layer constituted of, for example, a felt material, a non-woven fabric or the like is formed.

As can be understood from the above description, according to the vehicle interior structure of the present invention, relative displacement of the floor carpet to the floor spacer can be effectively prevented while ensuring easiness of removing the floor carpet without increasing the manufacturing cost.

### Brief Description of the Drawings

To better explain the present invention, and to show how the same may be carried into effect, reference will now be made, by way of example only, to the accompanying Drawings, in which:
Figure 1(a) is a perspective view of one embodiment of a floor spacer being an element of the present invention, and (b) is a view on arrow b-b in Figure 1 (a) with a part of it enlarged;
Figure 2 is a sectional view of one embodiment of a molding die for manufacturing the floor spacer;
Figure 3 is a sectional view of one embodiment of a vehicle interior space of the present invention; and
Figure 4 is a view explaining an outline of a tensile test.

### Detailed Description

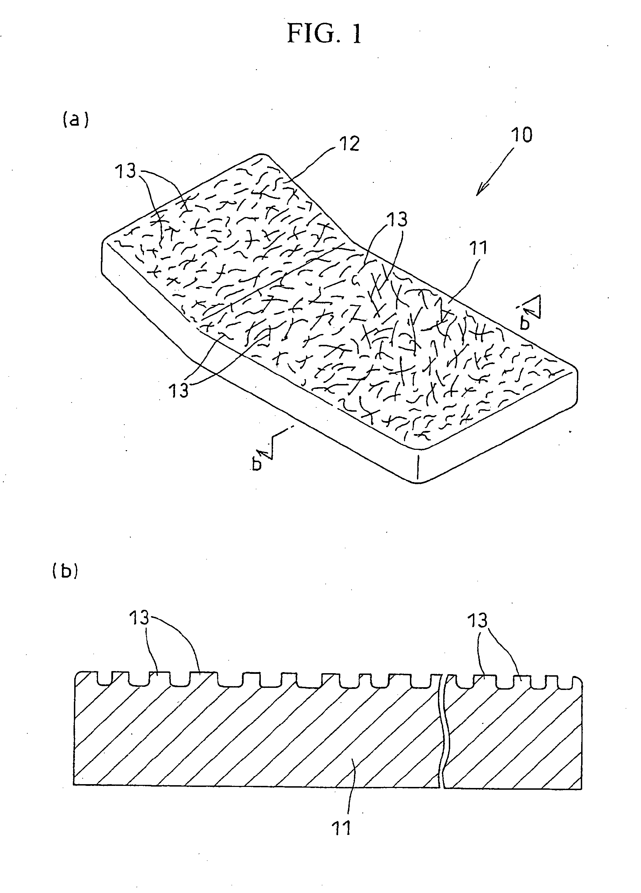

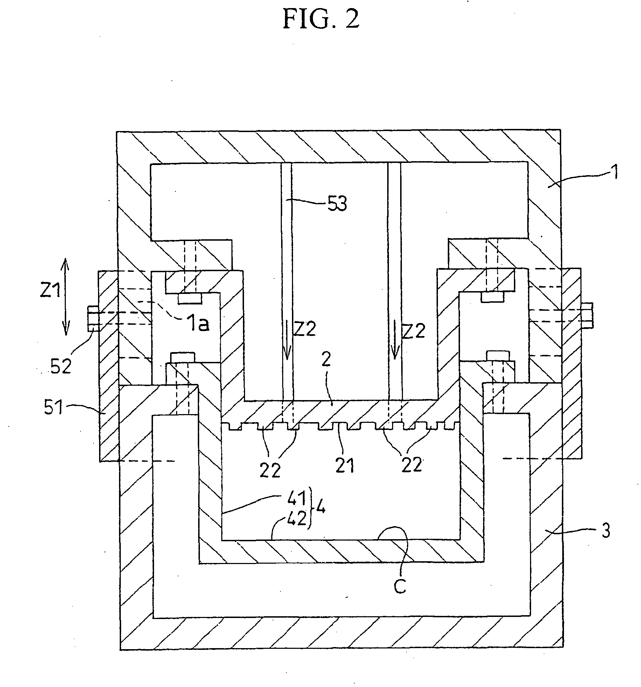

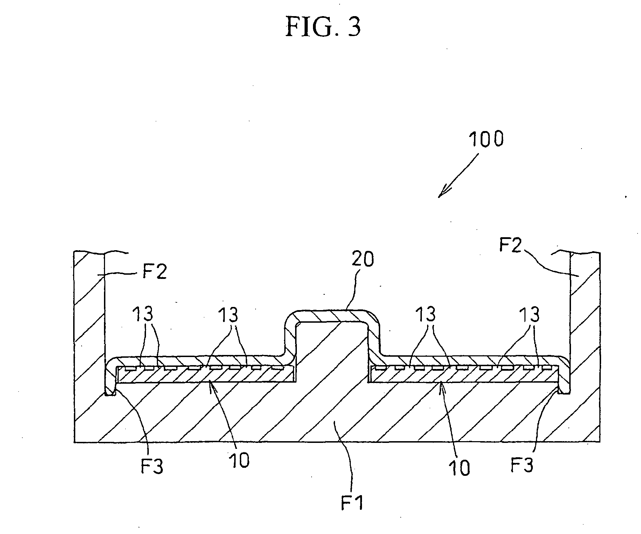

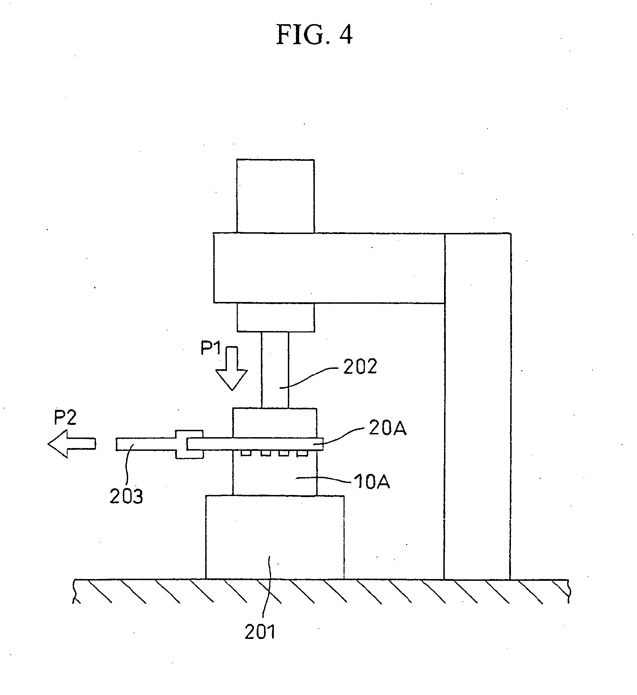

Hereinafter, an embodiment of the present invention will be described with reference to the drawings. Figure 1a shows a perspective view of one embodiment of a floor spacer being an element of the present invention, Figure 1b shows a view on arrow b-b in Figure la with a part of it enlarged, Figure 2 shows a sectional view of one embodiment of a molding die for manufacturing the floor spacer, Figure 3 shows a sectional view of one embodiment of a vehicle interior space of the present invention, and Figure 4 shows a view explaining an outline of a tensile test. The floor spacer shown in the drawings is in a mode in which a pad for absorbing an impact on leg portions and a horizontal pad are integrally molded, but the floor spacer of the present invention may be in any mode if only graining is applied to at least a part of the surface to be on the inner side of the compartment when disposed in a vehicle.

The floor spacer used in the present invention may be molded from expandable beads.

The expandable beads are not especially limited, but when a thermoplastic resin particle is used as the expandable beads, a styrene-modified polyethylene resin, a polystyrene resin, a polyethylene resin, a polypropylene resin and the like can be used. Above all, a resin particle foamed molding of a styrene-modified polyethylene resin which is obtained by impregnating a styrene monomer into a polyethylene resin and polymerizing the styrene-based monomer is especially preferable for the reasons that the resin particle foamed molding of the styrene-modified polyethylene resin is excellent in size stability and shape retention as compared with a foamed molding of a polyethylene resin particle and a foamed molding of a polypropylene resin particle, and powder due to abrasion hardly occurs as compared with a foamed molding of a polystyrene resin particle. Further, the ratio of the styrene component in the styrene-modified polyethylene resin is 40 to 90 weight%, preferably 50 to 85 weight%, and more preferably 55 to 75 weight%.

The floor spacer may include a horizontal pad, a pad for absorbing an impact on leg portions in which a plurality of recessed grooves are formed on the bottom surface to be on a vehicle body side when being placed in the vehicle, further a product formed by integrally molding them, a product formed by bonding them with an adhesive or the like, or the like, and graining is applied to at least a portion which a floor carpet is laid on and which is on the surface on the inner side of the vehicle compartment. The mode of the above described recessed groove is not especially limited, but, for example, a mode in a longitudinally longer shape provided to extend in the longitudinal direction or lateral direction of the vehicle, a mode of a rectangle, a circle and an ellipse in plane view and the like can be applied. Further, the groove depth can be properly adjusted, and may be suitably set if only the groove is in the shape (including the depth) which can effectively absorb impact energy by the recessed groove buckling at the time of collision of the vehicle.

On molding the floor spacer, the thermoplastic resin such as the above described styrene-modified polyethylene resin, for example, may be impregnated with a blowing agent to prepare an expandable thermoplastic resin, and by pre-expanded the expandable thermoplastic resin with heating steam or the like, pre-expanded beads may be produced. Next, the pre-expanded beads may be filled in the cavity of a molding die, and are foam-molded by steam heating or the like. In this case, as the expansion ratio of the floor spacer, molding is performed by the pre-expanded beads with the expansion ratio adjusted in the range of, for example, 3 to 70. The one with the expansion ratio of less than 3 becomes very hard, and therefore, sufficient plastic deformation performance by the foam cannot be expected. Meanwhile, when the expansion ratio exceeds 70, the foam becomes too soft to obtain a reactive force as a foam.

The above described molding die may be a molding die which is constituted of, for example, a fixed die and a movable die, a recessed die constituted of an aluminum alloy casting or the like is mounted to one of them, whereas a projected die of the same material is mounted to the other one, and a part of the projected die is fitted in the recessed die to form a cavity. Recesses and projections which form a grain pattern in an optional shape and size may be provided on the end surface of the projected die, which faces the cavity. By using such a molding die, graining can be applied to one surface of the floor spacer.

Incidentally, as the size of each of the projected portions formed in a part or all of the one surface of the floor spacer by graining, the range of for example, a square of 0.5 mm by 0.5 mm in plane view with the dimension of the projected length (height) of 0.5 mm to a square of 5 mm by 5 mm in plane view with the dimension of the height of 2 mm is preferable. This is as the result of the experiment by the inventors that in the case of the size smaller than the above described minimum size, and in the case of the size larger than the above described maximum size, engagement of the floor carpet with the floor spacer becomes weak in both cases, and displacement of the floor carpet cannot be effectively prevented.

In embodiments of the present invention, the relative displacement of the floor carpet can be effectively prevented with an extremely simple constitution in which only graining is applied to at least a part of the surface to be on the inner side of the compartment when disposed in the vehicle. Further, the graining can be performed by only providing recesses and projections which form a grain pattern on the end surface or the like of the projected die constituting the molding die, and therefore, manufacturing cost of the floor spacer is not increased at all.

Figure 1a shows one embodiment of the floor spacer. In a floor spacer 10, a horizontal pad 11 and a pad 12 for absorbing an impact on leg portions are integrally molded, and a number of projected portions 13, 13, ... which are formed by graining as shown in the enlarged view of Figure 1b are provided on the surface to be on the inner side of the vehicle compartment when the floor spacer 10 is placed in the vehicle compartment, as shown in the enlarged view of Figure 1b. An embodiment in which a plurality of recessed grooves are formed on the undersurface of the pad for absorbing an impact on leg portions (bottom surface to be on the vehicle body side at the time of being placed in the vehicle) may be adopted. Further, a mode in which the horizontal pad 11 and the pad 12 for absorbing an impact on leg portions are separately molded, and are assembled by fitting or an adhesive may be adopted.

Figure 2 is a sectional view of one embodiment of a molding die. The molding die is broadly constituted of a movable die 1, a projected die 2 which is fixed to the inside of the movable die 1 with bolts and projected downward, a recessed die 4 in which a part of the projected die 2 is fitted while sliding, and a fixed die 3 to which the recessed die 4 is fixed with bolts. Foamed resin particle is filled in a cavity C defined by an end surface 21 of the projected die 2, a wall surface 41 and a bottom surface 42 which form an inner wall surface of the recessed die 4 via filling pipes 53 and 53 which communicates with the bottom surface 21 of the projected die 2 (direction Z2 in the drawing).

In the movable die 1 and the fixed die 3, connection portions of the respective side surfaces are enveloped by a guide plate 51 so that both of them are assembled not to be displaced when the movable die 1 moves (direction Z1 in the drawing). A movable bolt 52 which connects the side surface of the movable die 1 and the guide plate 51 is loosely fitted in a bolt hole 1a which is bored in the movable die 1 to be able to go up and down.

Grain patterns 22, 22, ... each in a desired shape and a desired size are provided on the end surface 21 of the projected die 2. The shape of the grain which is formed is not especially limited as long as it is the form (and size) which can exhibit predetermined tensile strength (frictional strength) with a floor carpet, such as a form in which a number of projected portions which are square and rectangular in plane view are provided at constant spaces, and a mode constituted of a number of ridges continuing in the directions orthogonal to each other at constant spaces and the like.

In the molding method of the floor spacer 10, for example, a styrene-modified polyethylene resin is used, and particles in which the pre-expanded beads for the pad for absorbing an impact on leg portions is pre-expanded at a lower ratio as compared with the pre-expanded beads for the pad for absorbing an impact on lower portions are filled into the cavity from their own filling ports not illustrated. Here, in the vicinity of the boundary of the pad for absorbing an impact on leg portions and the horizontal pad in the cavity, a partition wall is provided in advance so that particles of both of them do not mix with each other, and the respective shapes are defined by the inner wall surface of the cavity and the partition wall. The pre-expanded beads for each of them are filled into each of the partitioned cavities at the same time, and the partition wall is quickly removed from the cavity after filling, whereby the floor spacer 10 for a vehicle in which the expansion ratio differs in the horizontal pad 11 and the pad 12 for absorbing an impact on leg portions, and graining is applied on one side surface can be molded.

It goes without saying that other than the illustrated floor spacer for a vehicle, only the horizontal pad, or only the pad for absorbing an impact on leg portions can be molded with the molding die.

Figure 3 is a sectional view schematically showing a vehicle interior structure 100 formed by placing the floor spacer 10 shown in Figure 1 in the vehicle compartment, and a floor carpet 20 is laid on the surface on the inner side of the vehicle compartment. The floor spacer 10 is placed on a floor frame F1 of the vehicle in the posture with a grained surface (projected portions 13, 13, ...) facing to the inner side of the vehicle compartment, the floor carpet 20 is laid on the top of it (interior side), and its end portion is buried in a groove F3 formed in connection portions of the floor frame F1 and a side frame F2. On the backside of the floor carpet 20 which abuts on the grained surface, a fiber layer not illustrated constituted of, for example, a felt material and a non-woven fabric is formed.

According to the interior structure 100 shown in the drawing, even with the constitution in which the floor carpet 20 is simply laid on the floor spacer 10, a relative displacement of the floor carpet 20 is effectively prevented by the grained surface of the floor spacer 10.

### [Tensile test and the result]

Next, the tensile test conducted by the inventors to verify the resistance to skidding of the floor carpet with respect to the floor spacer of the present invention, and the result of the test will be described based on Figure 4.

First, a floor spacer 10A which is molded into a predetermined shape and size is bonded onto a base seat 201 in the posture in which the grained surface faces upward, and a floor carpet 20A with a fiber layer formed on the back surface is laid on the grained surface. The floor carpet 20A is pressed (P1 direction) at a constant pressure with a piston rod 202 constituting the cylinder unit above the floor carpet 20A. In this state, the carpet is pulled (P2 direction) with a predetermined tensile force via a jig 203 which fixes the end portion of the floor carpet 20A, and the tensile load when the carpet starts to move is measured with a spring scale.

The floor spacer 10A used in the test is made by foam-molding the pre-expanded beads constituted of polystyrene with an expansion ratio of 50 in the molding die shown in Figure 2, and by working the foamed molding into a size of 80 mm by 80 mm by 15 mm (thickness). Further, the projected portion which forms a grain is formed into a rectangle in plane view in a size of 1.9 mm by 2.8 mm with a height of 0.5 mm.

Further, the floor carpet 20A is worked into 200 mm by 200 mm by 3 mm (thickness), and the piston rod tip end which presses the floor carpet 20A from above is a square in plane view with its area of 70 cm².

As a result of measuring the tensile load when the carpet starts to move by bearing a load of 98 N (10 kgf) from above by the piston rod 202, the tensile load of 156.8 N (16 kgf) was measured. As a result of similarly conducting the tensile test with the mode of the preferable projected portion size of the grain already described (in the size of the square of 0.5 mm by 0.5 mm in plane view with a projected length (height) of 0.5 mm to the size of the square of 5 mm by 5 mm in plane view with the height of 2 mm), the tensile load of 137.2 to 156.8 N (14 to 16 kgf) was measured. Meanwhile, as a result of similarly conducting the tensile test between the conventional flat floor spacer without a grained surface and the floor carpet, the tensile load was about 98 N (10 kgf).

According to the additional experiment by the inventors, it is found out that the external force (called the tensile load in the above test) which is exerted on the floor carpet by the occupant slipping on the floor carpet or the like is about 98 N (10 kgf). Accordingly, by adopting the floor spacer including the grained surface having the projected portions in the above described shapes and sizes, the object of the present invention can be sufficiently achieved.

The embodiment of the present invention is described in detail above by using the drawings, but the concrete constitution is not limited to the embodiment, and design changes in the range without departing from the scope of the appended claims are included in the present invention.

## Claims

1. A vehicle interior structure, wherein
a floor spacer for a vehicle is to be disposed in the vehicle, and a floor carpet is laid on at least the floor spacer surface to be on the inner side of the compartment of the vehicle, and
graining is applied to the said surface to be on an inner side of a compartment when being disposed in the vehicle; **characterised in that**:
a fiber layer is formed on a back surface of the floor carpet which abuts on the grained floor spacer surface.

## Patentansprüche

1. Fahrzeuginnenstruktur, bei der
ein Bodenabstandsstück für ein Fahrzeug zur Anordnung in dem Fahrzeug geeignet ist, und ein Bodenteppich zumindest auf die Bodenabstandsstückfläche gelegt ist, die auf der inneren Seite des Abteils des Fahrzeugs vorgesehen ist, und
Körnen auf diese Fläche angewendet wird, die auf der inneren Seite eines Abteils vorgesehen ist, wenn in dem Fahrzeug angeordnet;
**dadurch gekennzeichnet, dass**
eine Faserschicht auf einer Rückfläche des Bodenteppichs ausgebildet ist, die auf der gekörnten Bodenabstandsstückfläche anliegt.

## Revendications

1. Structure intérieure de véhicule, dans laquelle
une cale de sol pour véhicule doit être disposée dans le véhicule, et un tapis de sol est posé sur au moins la surface de la cale de sol pour être sur le côté intérieur du compartiment du véhicule, et
un grainage est appliqué à ladite surface pour être sur un côté intérieur d'un compartiment lorsqu'étant disposé dans le véhicule ; **caractérisée en ce que**
une couche de fibres est formée sur une surface arrière du tapis de sol qui est en butée avec la surface grainée de la cale de sol.
